# EUROPÄISCHE PATENTSCHRIFT

(11) **EP 2 172 351 B1**
(45) Veröffentlichungstag und Bekanntmachung des Hinweises auf die Patenterteilung: **25.05.2011**
(21) Anmeldenummer: 09450179.8
(22) Anmeldetag: 22.09.2009
(51) Int. Cl.: B60C 27/08

(54) **Kettenglied für Gleitschutzkette**
Chain link for anti-skid chain
Maillon pour une chaîne antidérapante

(30) Priorität: 01.10.2008 AT 15292008; 03.06.2009 AT 8572009
(43) Veröffentlichungstag der Anmeldung: 07.04.2010
(73) Patentinhaber: Pewag Schneeketten GmbH & Co KG, 9371 Brückl (AT)
(72) Erfinder: Pengg, Ägyd, 9020 Klagenfurt (AT); Schmid, Karl, 9371 Brückl (AT)
(74) Vertreter: Patentanwaltskanzlei Matschnig & Forsthuber OG

(56) Entgegenhaltungen:
- WO-A-2006/135249
- US-A- 1 883 000
- US-A- 2 184 127

## Beschreibung

Die Erfindung betrifft ein Kettenglied für eine Gleitschutzkette für Fahrzeugreifen, wobei auf dem Kettenglied zumindest zwei abstehende Bolzen angeordnet sind.

Die Erfindung betrifft weiters eine Gleitschutzkette für Fahrzeugreifen mit einem Laufnetz, welches Kettenelementkonfigurationen enthält, wobei die Kettenelementkonfigurationen abwechselnd aus länglichen Vertikalgliedern und in Ausnehmungen derselben eingreifende Horizontalglieder bestehen, wobei vertikal und horizontal in Bezug auf eine Lauffläche des Fahrzeugreifens bezogen ist.

Gleitschutzketten mit Kettengliedern, die abstehende Bolzen aufweisen, sind heutzutage Standardausrüstung insbesondere für schwerere Kraftfahrzeuge wie Lastwägen, Traktore und Forstmaschinen. Besonders bei schwierigen Verhältnissen wie Schnee, Eis und sumpfigem Untergrund haben sich solche Ketten bewährt.

Beispielsweise beschreibt das US-Patent US 5,423,365 eine Gleitschutzkette für die Verwendung in weichem und gefrorenem Untergrund. Die Gleitschutzkette umfasst ein Paar von parallel angeordneten Seitenketten, verbunden durch ein System aus Traktionsringen und dazwischen angeordneten Kettennetzen, die aus einer Anordnung von vertikalen und horizontalen Kettengliedern bestehen. An den Traktionsringen sind dabei rechteckige Vorsprünge zum Eingriff in weichen Untergrund angeordnet, während auf den vertikalen Kettengliedern radial abstehende Bolzen mit rundem Querschnitt angeordnet sind, die für Halt auf gefrorenem Boden sorgen.

Die WO 2006/135249 A1 offenbart eine Reifenkette zur Verbesserung des Haftungsvermögens insbesondere bei schneeigen und eisigen Fahrbahnverhältnissen. Die Kette besteht dabei aus einer Reihe von Kettengliedern - entweder abwechselnd stehende und liegende Glieder oder gedrehte Glieder -, auf denen abstehende Bolzen montiert sind, die einen bevorzugt eckigen oder polygonalen Querschnitt haben.

Auch die AT 006 031 U1 der Anmelderin zeigt eine Gleitschutzkette mit Ringelementen, auf die je ein radial abstehender Stachel aufgeschweißt ist, um die Bodenhaftung zu verbessern.

Die gattungsbildende US 2,184,127 beschreibt ein Verfahren zur Erzeugung eines gedrehten Kettenglieds mit abstehenden Bolzen zur Verbesserung der Haftung, wobei die Bolzen auf dem Kettenglied einander gegenüberliegend angeordnet sind.

Die US 1,883,000 zeigt ein Kettenglied für eine Gleitschutzkette mit abstehenden Bolzen, die an den Seiten des Kettenglieds befestigt sind und sich im Wesentlichen in eine Richtung normal zur Ebene des Kettenglieds erstrecken.

Nachteilig an den bekannten Lösungen ist vor allem, dass durch die Anordnung der Bolzen auf den Kettengliedern eine ordnungsgemäße Funktion bei belastungsbedingtem Verdrehen der Gleitschutzkette nicht mehr sichergestellt ist.

Es ist daher eine Aufgabe der Erfindung, eine Vorrichtung zu schaffen, bei der eine ordentliche Traktion auch bei hoher Belastung und Verdrehung der Gleitschutzkette sichergestellt ist.

Diese Aufgabe wird mit einem Kettenglied der oben genannten Art erfindungsgemäß dadurch gelöst, dass die Bolzen nebeneinander an einer Längsseite des Kettenglieds angeordnet ist und die Längsmittelachse der Bolzen gegen die Mittenebene des Kettenglieds geneigt ist, wobei die Mittenebene durch die Längsseiten und die Längsmittelachse des Kettenglieds verläuft. Der zumindest eine Bolzen weist dabei nach außen, ist also an der Außenseite des Kettenglieds angeordnet.

Dank der Erfindung bleiben die Bolzen der Kette auch dann mit dem Untergrund in Kontakt, wenn es durch starke Belastung der Kette zum Verdrehen der Kette kommt. Ein solches Verdrehen kann gerade bei Forstarbeiten oder allgemein im unwegsamen Gelände sehr leicht auftreten, wobei gerade in solchen Situationen guter Halt dringend erforderlich ist. Grundsätzlich kann es sich bei dem Kettenglied sowohl um ein liegendes (bzw. horizontales) als auch ein stehendes (bzw. vertikales) Kettenglied handeln, wobei sich diese Bezeichnungen immer in Relation zur Lauffläche des Reifens beziehen, an dem die Gleitschutzkette montiert ist. Günstigerweise sind der oder die Bolzen zumindest an einem stehenden (bzw. vertikalen) Kettenglied angeordnet, da dieses am meisten mit dem Untergrund in Verbindung steht. Üblicherweise hat das Kettenglied im Wesentlichen Ovalform. In diesem Fall befindet sich eine Längsseite parallel zur Hauptachse des Kettenovals, wobei auch die Längsachse des Kettenglieds in dieser Hauptachse verläuft. Der Querschnitt der Bolzen ist beispielsweise kreisförmig, kann aber auch anders ausgestaltet sein.

Unter der Mittenebene des Kettenglieds ist hier jene Ebene zu verstehen, die durch die Längsseiten und die Längsmittelachse des Kettenglieds verläuft. Eine Ebene, die normal auf die Längsmittelachse (und damit auch auf die Mittenebene) liegt, wird in den weiteren Ausführungen als "Normalebene" bezeichnet. Die Neigung der Bolzen gegen die Mittenebene des Kettenglieds bedeutet hier, dass sich das eine Ende des Bolzens, welches vom Kettenglied abgewandt orientiert ist, außerhalb der Mittenebene befindet, während sich das dem Kettenglied zugewandte Ende (das auch die Verbindung mit dem Kettenglied darstellt) in der Mittenebene befindet. Der Querschnitt der Bolzen ist beispielsweise kreisförmig oder viereckig, kann aber auch anders ausgestaltet sein.

Vorteilhafterweise sind die Längsmittelachsen der Bolzen um einen Winkel von 30°±10° gegen die Mittenebene des Kettenglieds geneigt. Damit ist einerseits sichergestellt, dass die Kette im unverdrehten Zustand durch die Bolzen gut Halt findet. Andererseits greifen die Bolzen durch diese Anordnung auch bei durch Belastung verdrehter Kette optimal in den Untergrund ein. Grundsätzlich können die Bolzen in zwei Richtungen aus der Mittenebene geneigt sein. Die Winkelangabe bezieht sich dabei jeweils auf den Absolutwinkel zwischen Bolzen-Längsmittelachse und Mittenebene des Kettenglieds. Grundsätzlich kann sich der Winkelbereich von 5° bis 85° erstrecken.

Günstigerweise sind je Kettenglied zwei Bolzen vorgesehen, die nebeneinander an einer Längsseite des Kettenglieds angeordnet sind. Dadurch ist eine noch bessere Funktion des Kettenglieds gewährleistet. Grundsätzlich können auch mehr Bolzen vorgesehen sein, allerdings gilt es die Vorteile einer höheren Zahl von Bolzen gegen die aufwändigere Fertigung abzuwägen.

In einer günstigen Ausführungsform der Erfindung sind die Bolzen in verschiedene Richtungen gegen die Mittenebene des Kettenglieds geneigt. Das bedeutet also, dass die Bolzen bei einer angenommenen Schnittansicht des Kettenglieds einmal im Uhrzeigersinn und einmal gegen den Uhrzeigersinn aus der Mittenebene des Kettenglieds geneigt sind. Die Winkelangaben sind dabei wieder jeweils als Absolutbetrag in den entgegengesetzten Richtungen zu verstehen. Durch diese Anordnung ist optimale Traktion bei beliebiger Verdrehung der Kette sichergestellt.

In den bisher beschriebenen Varianten der Erfindung sind die Bolzen einzig gegen die Mittenebene des Kettenglieds geneigt. In einer weiteren Ausführungsform der Erfindung können die Bolzen zudem gegen eine Ebene geneigt sein, die normal auf die Längsmittelachse des Kettenglieds orientiert ist. Diese Ebene wurde oben als Normalebene eingeführt. Das bedeutet also, dass nicht nur die Bolzen bzw. die Bolzenlängsmittelachsen aus der Mittenebene des Kettenglieds geneigt sind, sondern dass weiters die Bolzenmittelachsen um ihren Ursprung rotiert sind. Unter Ursprung wird hier der Punkt verstanden, an dem die Bolzen mit dem Kettenglied verbunden sind, bzw. sich die Bolzenmittelachsen mit dem Kettenglied schneiden. Somit lässt sich eine noch bessere Traktion bei beliebiger Verdrehung der Kette erreichen.

In einer günstigen Variante der Erfindung handelt es sich bei dem Kettenglied um ein gerades Kettenglied. Unter einem geraden Kettenglied wird hier ein solches Kettenglied verstanden, bei dem die Längsseiten und die Längsmittelachse in einer Ebene liegen. Die Bolzen sind vorteilhafterweise mit Schweißverbindungen an dem Kettenglied befestigt.

In einer weiteren Variante der Erfindung handelt es sich bei dem Kettenglied um ein Schmiedeteil. Sc hmiedeteile haben durch den Fertigungsprozess ein verdichtetes Gefüge und gegenüber gewalzten oder gezogenen Kettengliedern bessere Festigkeitswerte. Dies resultiert auch daraus, dass beim Schmieden höherwertige Materialien eingesetzt werden können als bei Kettengliedern, die verschweißt werden. Zudem ist die Möglichkeit der Formgebung bei Schmiedeteilen individueller, da sich im Gegensatz zum Verschweißen im Rahmen der Schmiedetechnik weitere Ausführungsmöglichkeiten ergeben. Die geneigten Stacheln in Traktionsrichtung greifen ideal in den Untergrund ein und sorgen für optimale Traktion und damit Sicherheit.

Dabei sind vorteilhafterweise Kettenglied und Bolzen einstückig gefertigt. Durch die Fertigung als Schmiedeteil lassen sich die Produktionskosten deutlich reduzieren.

Das Kettenglied weist dabei in einem Hauptteil zumindest ein Loch zur Aufnahme von weiteren Kettengliedern bei Verwendung des Kettenglieds in einem Kettenverbund auf.

Die oben genannte Aufgabe wird weiters mit einer Gleitschutzkette der eingangs erwähnten Art erfindungsgemäß dadurch gelöst, dass oben beschriebene Kettenglieder als Vertikalglieder verwendet werden. Die Kettenelementkonfigurationen sind dabei im Wesentlichen polygonförmig ausgebildet.

Im Folgenden wird die Erfindung anhand eines nicht einschränkenden Ausführungsbeispiels, das in der Zeichnung dargestellt ist, näher erläutert. In dieser zeigt schematisch:
Fig. 1 eine Ansicht eines erfindungsgemäßen geraden Kettenglieds aus einer Richtung normal auf die Mittenebene des Kettenglieds,
Fig. 2 eine Ansicht des Kettenglieds aus Fig. 1 aus einer Richtung entlang seiner Längsmittelachse,
Fig. 3 eine Ansicht des Kettenglieds in einer Richtung normal auf die Längsmittelachse von oben, unter Berücksichtigung der Lage in Fig.1,
Fig. 4 eine Ansicht des Kettenglieds in einer Richtung wie in Fig. 3, allerdings von unten,
Fig. 5 eine perspektivische Ansicht eines erfindungsgemäßen Kettenglieds, das als Schmiedeteil ausgeführt ist,
Fig. 6 einen Seitenriss des Kettenglieds aus Fig. 3 entlang einer Längsachse des Kettenglieds;
Fig. 7 einen Aufriss des Kettenglieds aus Fig. 3 in einer Richtung normal auf die Längsachse des Ketteglieds,
Fig. 8 einen Grundriss des Kettenglieds auf Fig. 3, und
Fig. 9 einen Ausschnitt einer Gleitschutzkette mit verschiedenen Ausführungen der erfindungsgemäßen Kettenglieder.

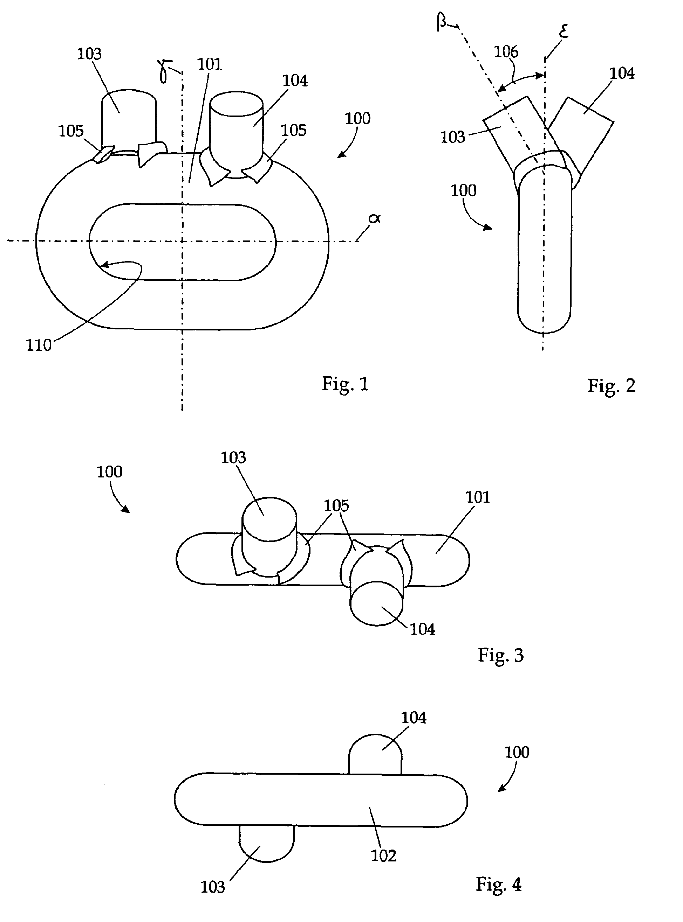

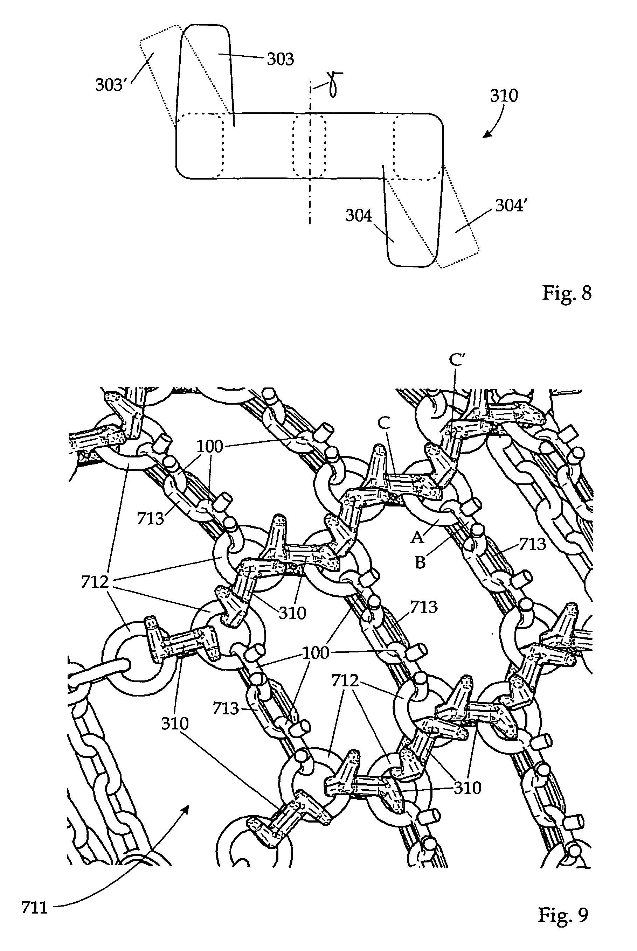

Fig. 1 zeigt eine Ausführungsform der Erfindung anhand eines geraden (z.B. gewalzten oder gezogenen) Kettenglieds 100 zur genaueren Erläuterung der vorteilhaften Eigenschaften. Fig. 1 zeigt dabei eine Ansicht aus einer Richtung normal auf eine Mittenebene ε (siehe Fig. 2) des geraden Kettenglieds 100, die sich in der vorliegenden Abbildung in der Blattebene befindet. Das gerade Kettenglied 100 ist ovalförmig und weist eine obere 101 und eine untere Längsseite 102 auf, wobei die Bezeichnungen "obere" und "untere" hier willkürlich gewählt sind und sich auf die Darstellung in Fig.1 beziehen. Parallel zu den Längsseiten 101, 102 verläuft eine Längsmittelachse α. Normal auf die Längsmittelachse α und die Mittenebene liegt die Normalebene γ. Natürlich wird das gerade Kettenglied 100 nicht einzeln verwendet, sondern günstigerweise im Verbund zusammen mit anderen Kettengliedern, Traktionsringen oder Schmiedeteilen in einer Gleitschutzkette (siehe Fig. 9) - die Darstellung dient also nur dem besseren Verständnis.

An der oberen Längsseite 101 des geraden Kettenglieds 100 sind zwei Bolzen 103, 104 mit kreisförmigem Querschnitt angeschweißt, wie anhand der skizzierten Schweißnähte 105 erkennbar ist. Grundsätzlich ist auch eine andere Zahl von Bolzen 103, 104 möglich, beispielsweise kann auch nur ein Bolzen vorgesehen sein, eventuell können aber auch drei oder mehr Bolzen angeschweißt werden. Auch der Bolzenquerschnitt kann anders als kreisförmig ausgeführt sein, beispielsweise drei-, vier- oder mehreckig. Die Bolzen 103, 104 haben die Aufgabe, bei Betrieb des Fahrzeuges, das mit einer Gleitschutzkette mit erfindungsgemäßen Kettengliedern ausgestattet ist, in den Untergrund einzugreifen und so für eine bessere Haftung bzw. Traktion zu sorgen.

Aus Fig. 2, die eine Ansicht des geraden Kettenglieds 100 entlang der Längsmittelachse α zeigt, ist erkennbar, dass die Längsachse β der Bolzen 103, 104 (in Fig. 2 nur bei einem ersten Bolzen 103 eingezeichnet) gegen die Mittenebene ε des geraden Kettenglieds 100 geneigt sind. Das hat den Vorteil, dass die Haftung der Kettenglieder auch dann sichergestellt ist, wenn sich die Gleitschutzkette durch die Belastung beim Betrieb verdreht und sich ihre Kontaktverhältnisse zum Untergrund verändern.

Beispielsweise sind Längsachsen β (Bolzenlängsmittelachsen) der Bolzen 103, 104 im vorliegenden Fall um einen Winkel 106 von etwa 30° gegen die Mittenebene ε des geraden Kettenglieds 100 geneigt, wobei grundsätzlich die Neigung im Bereich von 5° bis 85° liegen kann.

Die Bolzen 103, 104 sind hier allerdings jeweils in eine andere Richtung aus der Mittenebene ε (bzw. in Richtungen zu verschiedenen Seiten der Mittenebene ε) geneigt; einfach ausgedrückt ist der erste Bolzen 103 gegen den Uhrzeigersinn geneigt, während der zweite Bolzen 104 im Uhrzeigersinn geneigt ist. Das hat den Vorteil, dass sich die Gleitschutzkette in beliebige Richtungen verdrehen kann, und die Funktion der Kettenglieder immer noch gegeben ist. Natürlich können auch alle Bolzen 103, 104 in eine Richtung einer Seite geneigt sein oder die Orientierungen beliebig anders kombiniert werden.

Fig. 3 zeigt eine Ansicht der oberen Längsseite 101 des Kettenglieds 100 von oben (wieder bezogen auf die Anordnung in Fig. 1) in einer Richtung, die in der Mittenebene ε des Kettenglieds 100 liegt. Hier ist zu erkennen, dass die Bolzen 103, 104 einen kreisförmigen Querschnitt haben; grundsätzlich sind aber auch andere Querschnittsformen möglich. Fig. 4 zeigt eine Ansicht des Kettenglieds 100 von unten.

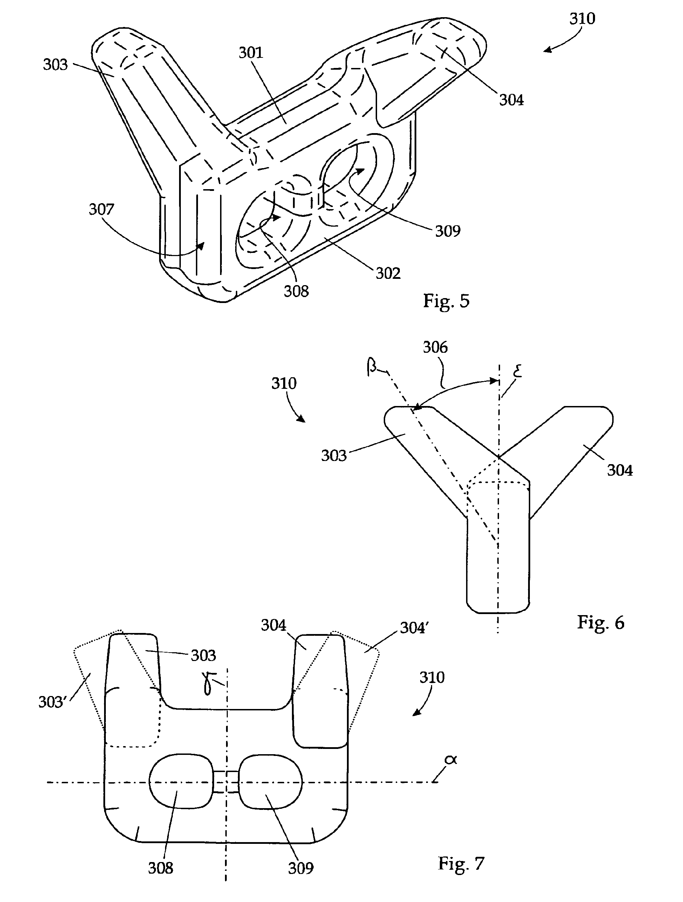

Fig. 5 zeigt eine weitere Ausführungsform der Erfindung anhand eines einzelnen (geschmiedeten) Kettenglieds 310, das als Schmiedeteil ausgeführt ist, in perspektivischer Ansicht. Natürlich wird auch dieses geschmiedete Kettenglied 310 zusammen mit anderen, unter Umständen auch anders gearteten Kettengliedern, im Verbund einer Kette verwendet (siehe Fig. 9). Zum besseren Verständnis ist hier allerdings wieder das geschmiedete Kettenglied 310 allein dargestellt.

Schmiedeteile haben bessere Festigkeitswerte als gewalzte oder gezogene Kettenglieder, da sie durch den Fertigungsprozess ein verdichtetes Gefüge aufweisen. Schmiedeteile erlauben eine individuellere Formgebung bei Schmiedeteilen, da sich im Gegensatz zum Verschweißen im Rahmen der Schmiedetechnik weitere Ausführungsmöglichkeiten ergeben.

Das geschmiedete Kettenglied 310 besteht aus einem geschmiedeten Hauptteil 307, in dem zwei Löcher 308, 309 zur Aufnahme von weiteren Kettengliedern ausgeführt sind. Grundsätzlich wäre es möglich, hier eine einzelne, durchgehende Aufnahme zu machen, ähnlich der inneren Öffnung (siehe 110 in Fig. 1) in dem geraden Kettenglied aus den Fign. 1 und 2. Der Hauptteil 307 ist im Wesentlichen rechteckig ausgeführt, wobei er zwei Längsseiten 301, 302 und zwei Breitseiten aufweist, wobei die Breitseiten dadurch gekennzeichnet sind, dass sie kürzer ausgeführt sind als die Längsseiten 301, 302. Bei den Längsseiten handelt es sich wieder um eine "obere" Längsseite 301 und eine "untere" Längsseite 302, wobei die Bezeichnungen wieder willkürlich und anhand der Darstellung in Fig. 5 festgelegt sind.

Der Hauptteil 307 des geschmiedeten Kettenglieds 310 weist (wie das gerade Kettenglied 100 in den Fign. 1 und 2) eine Mittenebene ε auf, die parallel zu den Längsseiten 301, 302 des Hauptteils 307 durch die Längsmittelachse α (siehe Fig. 7) des geschmiedeten Kettenglieds 310 verläuft (Mittenebene ε und Längsmittelachse α sind in Fig. 5 aus Gründen der Übersichtlichkeit nicht eingezeichnet).

An der oberen Längsseite 301 sind zwei Bolzen 303, 304 ausgeführt, die zusammen mit dem Hauptteil 307 des geschmiedeten Kettenglieds 310 einstückig geschmiedet sind. Aus fertigungstechnischen Gründen sind im vorliegenden Ausführungsbeispiel die Bolzen 303, 304 so mit viereckigem Querschnitt so ausgeführt, dass sie sich in der Richtung von dem Hauptteil 307 weg zunehmend verjüngen. Sowohl das Verjüngen als auch der viereckige Querschnitt sind nur Varianten von verschiedenen Möglichkeiten, die Bolzen auszuführen.

Die Bolzen 303, 304 sind jeweils aus der Mittenebene ε des geschmiedeten Kettenglieds 310 heraus geneigt. Die Bolzen 303, 304 sind dabei jeweils in eine andere Richtung aus der Mittenebene ε heraus geneigt. Natürlich handelt es sich bei der Ausführungsform in Fig. 1 nur um eine von mehreren Ausführungsformen. Es wäre beispielsweise auch denkbar, dass die Bolzen 303, 304 beide in die gleiche Richtung aus der Mittenebene ε heraus orientiert sind. Wie schon in der Diskussion der Ausführungsform aus Fign. 1 und 2 erwähnt, wäre es theoretisch auch möglich, dass weniger oder mehr als zwei Bolzen 303, 304 vorgesehen sind.

Fig. 6 zeigt einen Seitenriss des geschmiedeten Kettenglieds 310 aus Fig. 5. Die Darstellung erfolgt hier in Richtung der Längsmittelachse α bzw. der Mittenebene ε, die in Fig. 6 strichpunktiert eingezeichnet ist. Es ist deutlich erkennbar, dass die Bolzen 303, 304 gegen die Mittenebene ε des geschmiedeten Kettenglieds 310 geneigt sind. Der Winkel 306 zwischen den Bolzenlängsachsen β (wie in Fig. 2 ist zum besseren Verständnis nur eine Bolzenlängsachse β eingezeichnet) und der Mittenebene ε liegt jeweils zwischen 5° bis 85°, wobei der Winkel vorteilhafterweise 30°±10° beträgt.

In der vorteilhaften Ausführung schließen daher die Bolzen 3 03, 304 miteinander einen Winkel von bis zu 80° ein. Der Vollständigkeit halber sei erwähnt, dass aufgrund der sich nach oben ("oben" hier in Bezug auf die Darstellung in Fig. 6 bezogen) verjüngenden Bolzen 303, 304 der Winkel jeweils zwischen Bolzenlängsachse β (die nicht parallel zu den äußeren Begrenzungen der Bolzen ist) und Mittenebene ε gemessen wird.

In Fig. 7 ist ein Aufriss des geschmiedeten Kettenglieds 310 aus Fig. 5 in einer Richtung normal auf Mittenebene ε (siehe Fig. 6) dargestellt, die in der betreffenden Figur in der Blattebene liegt. Zur Veranschaulichung ist die Längsmittelachse α dargestellt. Normal auf die Längsmittelachse α verläuft die Normalebene γ.

Die beiden Löcher 308, 309 zur Aufnahme von benachbarten Kettengliedern in einem Kettenverbund sind deutlich erkennbar. Noch einmal sei erwähnt, dass die beiden Löcher 308, 309 auch zu einem einzelnen, durchgehenden Loch verbunden werden können. Weiters ist aus Fig. 7 ersichtlich, dass die Bolzen 303, 304 in dem vorliegenden Ausführungsbeispiel so gefertigt sind, dass sie nicht über die Breitseiten des geschmiedeten Kettenglieds 310 hinausragen. Das ist auch aus Fig. 8 erkennbar, die einen Grundriss des geschmiedeten Kettenglieds 310 darstellt, wobei auch hier die Bolzen 303, 304 nicht über die Breitseiten des geschmiedeten Kettenglieds 310 hinausreichen.

Natürlich können die Bolzen auch so gefertigt sein, dass sie über die Breitseiten des Kettenglieds 310 hinausragen, bzw. zusätzlich zur Neigung gegen die Mittenebene aus der Normalebene γ des Kettenglieds geneigt sind. Das bedeutet also, dass die Bolzen (bzw. die Bolzenlängsmittelachsen) zusätzlich zur Neigung gegen die Mittenebene um den Punkt rotiert sind, an dem sie mit dem Kettenglied verbunden sind. Üblicherweise wird die Rotation zwischen 0° und 90° liegen. Eine solche Variante ist in den Fign. 7 und 8 punktiert eingezeichnet: Die Bolzen 303', 304' ragen dabei über die Breitseiten des Kettenglieds 310 hinaus.

Diese Variante der Erfindung ist zwar für die Ausführungsform der Fign. 1 und 2 nicht dargestellt, natürlich können aber auch die dort vorgesehenen Bolzen 103, 104 in der beschriebenen Form angeordnet sein. Zum besseren Verständnis ist die Normalebene γ in den Fign. 1, 7 und 8 strichpunktiert eingezeichnet.

Fig. 9 zeigt einen Ausschnitt einer Gleitschutzkette 711, die Kettenglieder gemäß der Erfindung aufweist. Die Gleitschutzkette 711 weist dabei im Wesentlichen polygonförmige Strukturen auf, die miteinander verbunden sind. Im vorliegenden Fall handelt es sich um Sechsecke, natürlich sind auch beliebige andere Ausführungsarten möglich.

Die Gleitschutzkette 711 besteht aus ringförmigen Verbindungselementen 712, die liegend angeordnet sind und die mit stehenden Kettengliedern 100, 310 mit geneigten Bolzen verbunden sind, die ihrerseits wieder mit liegenden Kettengliedern 713, teilweise mit den bereits genannten ringförmigen Verbindungselementen 100, 310, 712 zusammenwirken.

Bei Betrachtung eines bestimmten ringförmigen Verbindungselements 712, in Fig. 9 mit A bezeichnet, ist erkennbar, dass dieses γ-förmig mit weiteren Kettengliedern verbunden ist. In eine Richtung (entlang des "Stammes" der Y-Form) ist das ringförmige Verbindungselement A mit einem stehenden gezogenen Kettenglied B (entspricht dem Kettenglied 100 aus den Fig. 1 und 2) verbunden, das wiederum in ein liegendes Kettenglied (ohne Bolzen) 713 eingreift, das über ein weiteres stehendes gezogenes Kettenglied mit einem anderen ringförmigen Verbindungselement verbunden ist.

Das ringförmige Verbindungselement A ist in zwei weitere Richtungen (die "Äste" der Y-Form) mit stehenden Kettengliedern mit Bolzen verbunden, die als Schmiedeteile ausgeführt sind. Diese geschmiedeten Kettenglieder C, C' (entsprechen dem Kettenglied 310 aus den Fig. 5 bis 8) greifen ihrerseits jeweils wieder in ringförmige Verbindungselemente ein. Die Gleitschutzkette besteht im Wesentlichen aus einer Aneinanderreihung dieser Anordnungen.

### BEZUGSZEICHENLISTE

- 100: gerades Kettenglied
- 101, 301: obere Längsseite
- 102, 302: untere Längsseite
- 103, 303, 303',104, 304, 304': Bolzen
- 105: Schweißnaht
- 106,306: Winkel
- 307: (geschmiedeter) Hauptteil
- 308,309: Loch
- 310: geschmiedetes Kettenglied
- 711: Gleitschutzkette
- 712: ringförmiges Verbindungselement
- 713: liegendes Kettenglied

- α: Längsmittelachse
- β: Bolzenlängsmittelachse
- γ: Normalebene
- ε: Mittenebene

## Patentansprüche

1. Kettenglied (100, 310) für eine Gleitschutzkette für Fahrzeugreifen, wobei auf dem Kettenglied zumindest zwei abstehende Bolzen (103, 303, 303', 104, 304, 304') angeordnet sind, **dadurch gekennzeichnet, dass** die Bolzen nebeneinander an einer Längsseite (101, 301) des Kettenglieds (100, 310) angeordnet sind und die Längsmittelachse (β) der Bolzen gegen die Mittenebene (ε) des Kettenglieds geneigt ist, wobei die Mittenebene (ε) durch die Längsseiten (101, 301, 102, 302) und die Längsmittelachse (α) des Kettenglieds verläuft.

2. Kettenglied nach Anspruch 1, **dadurch gekennzeichnet, dass** die Längsmittelachsen (β) der Bolzen (103, 303, 303', 104, 304, 304') um einen Winkel (106, 306) von 30°±10° gegen die Mittenebene (ε) des Kettenglieds geneigt ist.

3. Kettenglied nach Anspruch 1 oder 2, **dadurch gekennzeichnet, dass** die Bolzen (103, 303, 303', 104, 304, 304') in verschiedene Richtungen gegen die Mittenebene (ε) des Kettenglieds geneigt sind.

4. Kettenglied nach einem der Ansprüche 1 bis 3, **dadurch gekennzeichnet, dass** die Bolzen (103, 303, 303', 104, 304, 304') weiters gegen eine Normalebene (γ) geneigt sind, die normal auf die Längsmittelachse (α) des Kettenglieds orientiert ist.

5. Kettenglied nach einem der Ansprüche 1 bis 4, **dadurch gekennzeichnet, dass** es sich bei dem Kettenglied um ein gerades Kettenglied handelt.

6. Kettenglied nach einem der Ansprüche 1 bis 5, **dadurch gekennzeichnet, dass** die Bolzen (103, 303, 303', 104, 304, 304') mittels Schweißverbindungen (105) an dem Kettenglied befestigt sind.

7. Kettenglied nach einem der Ansprüche 1 bis 5, **dadurch gekennzeichnet, dass** das Kettenglied (310) als Schmiedeteil gefertigt ist.

8. Kettenglied nach Anspruch 7, **dadurch gekennzeichnet, dass** Kettenglied (310) und Bolzen (303, 303', 304, 304') einstückig gefertigt sind.

9. Kettenglied nach Anspruch 7 oder 8, **dadurch gekennzeichnet, dass** das Kettenglied (310) in einem Hauptteil (307) zumindest ein Loch (308, 309) zur Aufnahme von weiteren Kettengliedern bei Verwendung in einem Kettenverbund aufweist.

10. Gleitschutzkette (711) für Fahrzeugreifen mit einem Laufnetz, welches Kettenelementkonfigurationen enthält, wobei die Kettenelementkonfigurationen abwechselnd aus länglichen stehenden Kettengliedern und in Ausnehmungen derselben eingreifenden liegenden Kettengliedern bestehen, wobei vertikal und horizontal in Bezug auf eine Lauffläche des Fahrzeugreifens bezogen ist, **dadurch gekennzeichnet, dass** Kettenglieder entsprechend einem der Ansprüche 1 bis 9 als Vertikalglieder verwendet werden.

## Claims

1. Chain link (100, 310) for an anti-skid chain for vehicle tyres, whereby at least two protruding studs (103, 303, 303', 104, 304, 304') are arranged on the chain link, **characterised in that** the studs are arranged next to each other on a longitudinal side (101, 301) of the chain link (100, 310), and the longitudinal central axis of the studs (β) is inclined against the central plane (ε) of the chain link, whereby the central plane (ε) runs through the longitudinal sides (101, 301, 102, 302) and the longitudinal central axis (α) of the chain link.

2. Chain link according to claim 1, **characterised in that** the longitudinal central axis (β) of the studs (103, 303, 303', 104, 304, 304') is inclined against the central plane (ε) of the chain link at an angle (106, 306) of 30°±10°.

3. Chain link according to claim 1 or 2, **characterised in that** the studs (103, 303, 303', 104, 304, 304') are inclined in different directions against the central plane (ε) of the chain link.

4. Chain link according to claim 1 or 3, **characterised in that** the studs (103, 303, 303', 104, 304, 304') are also inclined against a normal plane (γ), which is oriented normal to the longitudinal axis α of the chain link.

5. Chain link according to any one claim 1 to 4, **characterised in that** the chain link is a straight link.

6. Chain link according to any one claim 1 to 5, **characterised in that** the studs (103, 303, 303', 104, 304, 304') are attached to the chain link by means of welded joints (105).

7. Chain link according to any one claims 1 to 5, **characterised in that** the chain link (310) is made as a forged part.

8. Chain link according to claim 7, **characterised in that** the chain link (310) and studs (303, 303', 304, 304') are integrally made.

9. Chain link according to claim 8, **characterised in that** the chain link (310) in a main part (307) comprises at least one hole (308, 309) for acceptance of further chain links in use in a chain connection.

10. Anti-skid chain (711) for vehicle tyres, with a chain mesh containing chain element configurations, whereby the chain element configurations consist alternately of oblong vertical chain links, and horizontal chain links meshing in recesses of the same, whereby vertically and horizontally relate to a running surface of the vehicle tyres, **characterised in that** the chain links corresponding to one of claims 1 to 9 are used as vertical links.

## Revendications

1. Maillon (100, 310) pour une chaîne antidérapante de pneus de véhicule, au moins deux boulons éloignés (103, 303, 303', 104, 304, 304') étant agencés sur le maillon, **caractérisé en ce que** les boulons sont agencés les uns à côté des autres sur un côté longitudinal (101, 301) du maillon (100, 310) et **en ce que** l'axe médian longitudinal (β) des boulons est incliné contre le plan médian (ε) du maillon, le plan médian (ε) s'étendant au travers des côtés longitudinaux (101, 301, 102, 302) et de l'axe médian longitudinal (α) du maillon.

2. Maillon selon la revendication 1, **caractérisé en ce que** les axes médians longitudinaux (β) des boulons (103, 303, 303', 104, 304, 304') sont inclinés d'un angle (106, 306) s'élevant à 30° ±10° contre le plan médian (ε) du maillon.

3. Maillon selon la revendication 1 ou 2, **caractérisé en ce que** les boulons (103, 303, 303', 104, 304, 304') sont inclinés dans différentes directions contre le plan médian (ε) du maillon.

4. Maillon selon l'une quelconque des revendications 1 à 3, **caractérisé en ce que** les boulons (103, 303, 303', 104, 304, 304') sont davantage inclinés contre un plan normal (γ) qui est orienté verticalement à l'axe médian longitudinal (α) du maillon.

5. Maillon selon l'une quelconque des revendications 1 à 4, **caractérisé en ce qu'**il s'agit pour le maillon d'un maillon droit.

6. Maillon selon l'une quelconque des revendications 1 à 5, **caractérisé en ce que** les boulons (103, 303, 303', 104, 304, 304') sont fixés au moyen d'assemblages par soudure (105) sur le maillon.

7. Maillon selon l'une quelconque des revendications 1 à 5, **caractérisé en ce que** le maillon (310) est fabriqué comme une pièce forgée.

8. Maillon selon la revendication 7, **caractérisé en ce que** le maillon (310) et les boulons (303, 303', 304, 304') sont fabriqués d'un seul tenant.

9. Maillon selon la revendication 7 ou 8, **caractérisé en ce que** le maillon (310) présente, dans une partie principale (307), au moins un trou (308, 309) pour le logement d'autres maillons lors de l'utilisation dans un assemblage de chaîne.

10. Chaîne antidérapante (711) de pneus de véhicule avec un filet de roulement qui contient des configurations d'éléments de chaîne, les configurations d'éléments de chaîne se composant en alternance de maillons verticaux oblongs et s'engageant dans des évidements de ceux-ci, les termes vertical et horizontal faisant référence à une surface de roulement du pneu de véhicule, **caractérisée en ce que** des maillons selon l'une quelconque des revendications 1 à 9 sont utilisés comme maillons verticaux.
